**Europäisches Patentamt**

**European Patent Office**

**Office européen des brevets**

(19)

(11) Publication number : **0 510 873 A2**

# (12) EUROPEAN PATENT APPLICATION

(21) Application number : **92303414.4**

(22) Date of filing : **15.04.92**

(51) Int. Cl.⁵ : **C08G 77/08, C08G 77/44**

(30) Priority : **22.04.91 US 688765**

(43) Date of publication of application :
**28.10.92 Bulletin 92/44**

(84) Designated Contracting States :
**DE FR GB IT**

(71) Applicant : **DOW CORNING CORPORATION**
**3901 S. Saginaw Road**
**Midland Michigan 48686-0994 (US)**

(72) Inventor : **Gvozdic, Nedeljko Vladmira**
**4661 David Court**
**Bay City, Michigan (US)**
Inventor : **Lee, Chi-Long**
**5202 Claremont**
**Midland, Michigan 48640 (US)**

(74) Representative : **Laredo, Jack Joseph et al**
**Elkington and Fife Prospect House 8**
**Pembroke Road**
**Sevenoaks, Kent TN13 1XR (GB)**

(54) **Self-reinforcing siloxane elastomers.**

(57) A process for the copolymerization of hexamethylcyclotrisiloxane and hexaphenylcyclotrisiloxane in an ordered manner reacts the desired ratios of the siloxanes in the presence of a lithium containing catalyst and a solvent at a temperature which controls the polymerization pattern. When the polymerization temperature is below 100°C., the polymerization of hexamethylcyclotrisiloxane is favored. When the polymerization temperature is above 100°C., the polymerization of hexaphenylcyclotrisiloxane is favored. By selection of the silanes used, their ratios and the polymerization temperature, copolymers in the desired sequence of dimethylsiloxy units and diphenylsiloxy units can be formed.

EP 0 510 873 A2

This invention relates to siloxane block and pseudo-block copolymers of dimethylsiloxy units and diphenylsiloxy units.

A process has been discovered for controlling the copolymerization of hexamethylcyclotrisiloxane and hexaphenylcyclotrisiloxane so that the ratio of the dimethylsiloxy units to diphenylsiloxy units in any section of the polymer can be predetermined and controlled to give varying refractive indices and varying physical properties to the resulting polymers when they have been crosslinked to give elastomers.

This invention relates to a process for making copolymers having dimethylsiloxy and diphenylsiloxy repeating units in the desired ratios consisting essentially of reacting a mixture of hexamethylcyclotrisiloxane and hexaphenylcyclotrisiloxane in the presence of a lithium containing catalyst and a solvent, at a temperature selected to favor the ring-opening desired, temperatures below l00°C. favoring the opening of the hexamethylcyclotrisiloxane and temperatures above l00°C. favoring the opening of the hexaphenylcyclotrisiloxane, the ratios of hexamethylcyclotrisiloxane and hexaphenylcyclotrisiloxane being chosen to give the desired type of polymer.

The method of the present invention allows one to produce copolymers containing dimethylsiloxy units and diphenylsiloxy units in an ordered sequence and to include blocks varying in the ratio of dimethylsiloxy to diphenylsiloxy in which the ratio can vary from 0 to l00 percent of either of the diorganosiloxy groups from one end of the block to the other, and in either order as desired; as well as including blocks of only dimethylsiloxy, only diphenylsiloxy or mixtures of any of these blocks in the desired order. If M is used to represent dimethylsiloxy units and P is used to represent diphenylsiloxy units, possible blocks in which only one or the other siloxane is present can be represented as MMMMMM or PPPPPP. In blocks in which the ratio of M to P varies, the block can be represented as MMMPMMPPMPPP or PPPMPPMMPMMM. The method allows for the production of ordered polymers such as MMMPMMPPMPPP-PPPPP-PPPMPPMMPMMM. Since the starting ingredients are cyclotrisiloxanes, there are at least 3 siloxy units present at any single location.

The starting materials for use in the method of this invention are hexamethylcyclotrisiloxane and hexaphenylcyclotrisiloxane. These are well known silicone chemical ingredients, the manufacture of which is also well known. The lithium catalyst used in the method can be an organic lithium such as vinyllithium, $CH_2=CHLi$ or n-butyllithium, $CH_3CH_2CH_2CH_2Li$ or an organo-lithium compound such as described in U.S. Patent No. 3,337,497. Such an organo-lithium compound is dilithiumdiphenylsilanolate, $LiO(C_6H_5)_2SiO-Li$.

The solvent used in this method is one which will dissolve the dimethylcyclotrisiloxane and diphenylcyclotrisiloxane, as well as the copolymers produced. Preferred solvents are tetrahydrofuran for the ring-opening polymerization of hexamethylcyclotrisiloxane in the presence of hexaphenylcyclotrisiloxane and toluene for the preferred ring-opening polymerization of hexaphenylcyclotrisiloxane in the presence of hexamethylcyclotrisiloxane. Diphenylether is also a suitable solvent for use with the hexaphenylcyclotrisiloxane when it is desired to use reaction temperatures above l50°C. The tetrahydrofuran helps promote the ring-opening reaction of hexamethylcyclotrisiloxane in the presence of hexaphenylcyclotrisiloxane.

At the beginning of the copolymerization process, sufficient hexamethylcyclotrisiloxane has to be present to give at least one mole hexamethylcyclotrisiloxane per mole of lithium in the lithium containing catalyst. It has been found that this amount of hexamethylcyclotrisiloxane is necessary in order to activate the catalyst so that it will ring-open the hexaphenylcyclotrisiloxane. The ratio of hexaphenylcyclotrisiloxane to hexamethylcyclotrisiloxane to be used is determined by the result desired. If it is desired to produce a diphenylsilyl containing block as the first step, the mixture contains hexaphenylcyclotrisiloxane with the lithium catalyst and sufficient hexamethylcyclotrisiloxane to activate the lithium, as discussed above. The polymerization reaction for hexaphenylcyclotrisiloxane is predominant at temperatures of greater than l00°C., preferred are temperatures of greater than ll0°C., such as l50°C. to 200°C. The polymerization reaction for hexamethylcyclotrisiloxane is predominant at temperatures of less than l00°C., preferred are temperatures such as 60°C. in an aprotic polar solvent such as tetrahydrofuran. When it is desired to produce copolymer blocks having both dimethylsiloxy units and diphenylsiloxy units, the two cyclotrisiloxanes are mixed together in the desired ratio, the lithium catalyst is added and the temperature of reaction is picked to favor the ring-opening polymerization of the cyclic trimer whose units are desired to be at the beginning of the polymer. For example, if a mixture of l mole of hexamethylcyclotrisiloxane and l mole of hexaphenylcyclotrisiloxane were mixed together with a lithium catalyst in a solution of tetrahydrofuran and toluene and heated to 60°C., the hexamethylcyclotrisiloxane would preferentially ring open and form a polymer. As the amount of hexamethylcyclotrisiloxane diminished, the hexaphenylcyclotrisiloxane would start to ring open and join into the growing polymer along with the hexamethylcyclotrisiloxane. As the polymer was formed, the concentration of dimethylsiloxy groups along the polymer would become lower and the concentration of diphenylsiloxy groups would become larger, until finally only the diphenylsiloxy groups would be present at the growing end of the polymer. If the reaction conditions were changed to such as l20°C., the polymer formed would start with diphenylsiloxy groups, then gradually change to dimethylsiloxy groups as the concentration of hexaphenylcyclotrisiloxane became lower in the mixture. By changing the ratios of hexamethylcyclotrisiloxane and hexaphenylcyclotrisiloxane and by adjusting the temperature of reaction, the ring-opening and formation of polymer can be controlled.

The molecular weight or size of the polymer which results from this procedure is controlled by the amount of lithium catalyst used. The lithium ends up on the end or ends of the polymer, so the more lithium there is, the shorter the polymer length, as the polymer grows until all of the cyclotrisiloxane has been used up in forming polymer. If the lithium catalyst contains a single lithium atom, such as vinyllithium, the polymer formed will have the vinyl radical on one end and the lithium atom on the other. If the lithium containing catalyst is a dilithium, such as dilithiumdiphenylsilanolate, the polymer will grow from both ends of the catalyst and there will be a lithium atom on each end of the polymer, with the original diphenylsilanolate at the center of the polymer chain.

After the desired polymer is formed by following the above procedures, the polymerization is terminated by reacting it with a compound that forms a lithium salt and the desired terminal functional group. This chainstopping agent can be an organosilane, organosilazane or acetic acid. Preferred materials for this use include dimethylvinylchlorosilane, dimethylvinylsilazane and acetic acid.

The polymer is recovered from the solution by precipitating the product with methanol. The solvent is removed by filtration to obtain the product. The remaining solvent is removed by heating in a vacuum oven or in a hood with air circulation over the polymer. The solution of tetrahydrofuran or toluene can be poured into an excess of methanol to precipitate the polymer from the solution. The polymer can be filtered from the solvent/methanol and dried under vacuum to obtain the final product.

The composition of the polymer produced can be adjusted to produce a polymer having a refractive index (RI) of between l.43 to as high as l.53 and still have an elastomeric character. When the polymer is primarily dimethylsiloxy units, the RI is close to l.43. When the polymer is half dimethylsiloxy units and half diphenylsiloxy units, the RI is about l.5. It is possible to produce polymers having a greater proportion of diphenylsiloxy units, but the polymer becomes less elastomeric. The higher the content of diphenylsiloxy units in a copolymer, the more resinous the copolymer becomes.

The copolymers of this method can be optically clear, self-reinforced elastomers. If the polymer is built up so that it contains diphenylsiloxy blocks of at least 30 units in length, these blocks will act as reinforcement for the remainder of the copolymer of dimethylsiloxy blocks and mixed dimethylsiloxy/diphenylsiloxy units. The crosslinked polymer can have tensile strengths of at least 800 psi and elongation of at least 350 percent.

These materials are useful as optical coatings, coatings on lenses and as an interface between two optical materials that require a matching refractive index.

The following examples are included for illustrative purposes only and should not be construed as limiting the invention which is properly set forth in the appended claims.

Example I

A dry, three neck round-bottom flask equipped with a mechanical stirrer and condenser was set up so that dry argon gas could be passed through the flask to give a dry and inert atmosphere. The flask was loaded with l4 g of hexaphenylcyclotrisiloxane (HPTS), 38.3 g of hexamethylcyclotrisiloxane (HMTS), 60 ml of tetrahydrofuran (THF) and l5 ml of toluene. Next 0.000933 moles of vinyllithium initiator ($CH_2=CHLi$) was added and the reaction flask was heated in an oil bath at 60°C. for 2.5 hours. These reaction conditions favored the ring-opening of the hexamethylcyclotrisiloxane, so the reaction began with ring-opening polymerization of hexamethylcyclotrisiloxane first, followed gradually by the polymerization of hexaphenylcyclotrisiloxane as the concentration of hexamethylcyclotrisiloxane was depleted. Toward the end of polymerization, only the hexaphenylcyclotrisiloxanes were added to the growing polymer. The polymer had a vinyl dimethylsiloxy unit at one end and lithium silanolate at the other end. The proportion of dimethylsiloxy units at the vinyl end being the higher and gradually decreased, whereas that proportion of diphenylsiloxy groups gradually increased until the groups were all diphenylsiloxy groups at the lithium silanolate end of the polymer. At the end of this reaction time, l4 g of HPTS was added in the form of a toluene solution that had been passed through an activated alumina bed to remove moisture and any protic species present and the flask was heated to about ll0°C. and was purged with nitrogen to remove the solvents. After all of the solvents were removed, the reaction temperature was raised to 205°C. for 3 hours. Under these reaction conditions, the ring-opening polymerization of the hexaphenylcyclotrisiloxane took place, whereby the hexaphenylcyclotrisiloxane was added to the polymer to form a diphenylsiloxy block as a homopolymer on the end of the polymer. Then the flask was cooled to 60°C. and a l:l mixture of dimethylvinylchlorosilane and dimethylvinylsilazane was added to terminate the reaction. After 30 minutes, l00 ml of toluene was added and the swollen mass was poured into methanol. The precipitated product was recovered and vacuum dried at l00°C. to give a past having a viscosity of about 7000 Pa.s. The yield was 60 percent. The copolymer was a vinyl endblocked copolymer on both chain ends, having a variable dimethyl/diphenyl copolymer structure changing gradually to a diphenyl structure and becoming a polydiphenylsiloxane homopolymer. The copolymer had a refractive index (RI) of 1.53.

A sheet of the product was cured by mixing 2 g of the copolymer with 0.035 g of an SH containing crosslinker, degassing and then exposing to ultraviolet light. The cured sheet had a tensile strength of 200 psi and an elongation of about 700 percent when measured in accordance with ASTM D 412.

Example 2

The reaction flask described in Example 1 was loaded with 17 g of HPTS, 20 ml of THF, 20 ml of diphenyl ether (DPE) and about 0.0035 mol of HMTS. Next 0.00085 mole of dilithium diphenyl silanolate initiator was added and the reaction flask was heated to 85°C. for 10 minutes and then to 175°C. for 2.5 hours to initiate the ring-opening polymerization with the hexamethylcyclotrisiloxane and then to form a block of diphenylsiloxy homopolymer. The flask was cooled to 120°C. and 26 g of HPTS, 57 g of HMTS, 40 ml of toluene and 20 ml of THF were added and reacted at 120°C. for 3 hours. These reaction conditions favored the ring-opening polymerization of the hexaphenylcyclotrisiloxane, then as the hexaphenylcyclotrisiloxane was depleted, the ring-opening polymerization of the hexamethylcyclotrisiloxane began, until finally all of the hexaphenylcyclotrisiloxane was polymerized and only the hexamethylcyclotrisiloxane remained. The polymer formed in the early stage of polymerization was all diphenylsiloxy units. Then dimethylsiloxy units were gradually incorporated into the polymer. The ratio of dimethylsiloxy to diphenylsiloxy units increased gradually and became 100 percent dimethylsiloxy units toward the end of polymerization. Then 0.7 ml of vinylmethylcyclotrisiloxane was added and reacted at 120°C. for 30 minutes, the reaction flask was cooled to 60°C. and the reaction was terminated by adding 1.5 ml of a 1:1 mixture of dimethylvinylchlorosilane and dimethylvinylsilazane. After 30 minutes 100 ml of toluene was added and the swollen mass was poured into methanol. The product was recovered and vacuum dried at 100°C. to give a pasty product. The yield was 91 percent. The copolymer had a block of methyvinylsiloxane at the end of the polymer chain. The copolymer was a variable polymer which varied from dimethylsiloxy and diphenylsiloxy random block varying from mostly dimethylsiloxy to mostly diphenylsiloxy, to diphenylsiloxy block, then back to a random diphenylsiloxy and dimethylsiloxy block, going from mostly diphenylsiloxy to mostly dimethylsiloxy, with a RI of 1.49.

The above copolymer was cured by mixing 2 g of the polymer with 0.087 g of an SH containing crosslinker, degassing and exposing to ultraviolet light. The sheet was found to have a tensile strength of 80 psi, an elongation of 600 percent and a modulus at 100 percent elongation of 100 psi.

The above copolymer was mixed with 4 percent by weight of 2.5,bis(tert-butylperoxy)-2,5-dimethyl hexane crosslinker and molded under pressure in a chase into a test sheet by pressing for 30 minutes at 150°C. The cured sheet had a tensile strength of 800 psi and an elongation of 350 percent.

Example 3

The reaction flask of Example 1 was loaded with 50 g of HPTS, 69.3 g of HMTS, 1.8 ml of vinylmethylcyclotrisiloxane, 65 ml of toluene and 15 ml of THF. Next 0.0024 moles of n-butyllithium dissolved in hexane was added and the flask heated to 110°C. for 4 hours. These conditions favor the ring-opening of the hexaphenylcyclotrisiloxane so the polymer was built up starting with diphenylsiloxy groups, then gradually changing the ratio by adding dimethylsiloxy groups in higher proportions until only dimethylsiloxy groups are present because all of the diphenylsiloxy groups have been reacted. Then 1.8 moles of vinylmethylcyclotrisiloxane was added and reaction carried out for an additional 3.5 hours. The reaction was terminated by addition of the endblocking mixture of Example 2. After 30 minutes, 100 ml of toluene was added and the solution poured into methanol. The product was recovered and vacuum dried at 100°C. The product was a grease like material. The yield of copolymer, the copolymer varying from all diphenylsiloxy units to all dimethylsiloxy units at the other end of the copolymer, was 97 percent and the RI was 1.48.

The copolymer produced above was cured by mixing 1.6 g of the copolymer with 0.32 g of SH-type crosslinker of the formula $Me_3SiO(MePhSiO)_{20}(MeSi[CH_2CHMeCH_2SH]O)_5SiMe_3$, degassing and curing a sheet of the material under ultraviolet light by irradiating for 2 seconds under a UV lamp. The cured product had a tensile strength of 750 psi and ultimate elongation of 450 percent and a modulus at 100 percent elongation of 110 psi.

Example 4

The reaction flask of Example 1 was loaded with 31.9 g of HPTS, 44.2 g of HMTS, 40 ml of toluene and 10 ml of THF. Next 0.00038 mole of dilithiumdiphenylsilanolate initiator was added and the reaction flask was heated to 110°C. for 4 hours. Then 0.5 ml of vinylmethylcyclotrisiloxane was added and reaction carried out for additional 30 minutes at 110°C. The reaction was terminated with 1.5 ml of the endblocking agent of Example 2. After 30 minutes, 100 ml of toluene was added and the solution was poured into methanol. The product was recovered and vacuum dried at l00°C. The yield of copolymer having ends of vinylmethylsiloxy groups attached to a copolymer which had dimethylsiloxy groups on the ends and gradually changing to diphenylsiloxy groups in the middle, was 93 percent and the RI was l.49.

The above copolymer was cured by mixing 2 g of the copolymer with 0.l5 g of SH containing crosslinker, forming into a sheet and curing by exposure to ultraviolet light. The cured sheet had a tensile strength of 250 psi, an elongation of 400 percent and a modulus at l00 percent elongation of l00 psi.

The above copolymer was mixed with 4 percent by weight of 2.5,bis(tert-butylperoxy)-2,5-dimethyl hexane catalyst and molded into a test sheet by pressing for 30 minutes at l50°C. The cured sheet had a tensile strength of 670 psi and an elongation of 200 percent. These data show that a sufficient amount of diphenylsiloxyl units existed in the sample to give reinforcement to the remainder of the copolymer.

The above copolymer was mixed with 2 percent by weight of 2,5-bis(tert-butylperoxy)-2,5-dimethyl hexane catalyst and molded into a test sheet by pressing for 30 minutes at l50°C. The cured sheet had a tensile strength of l30 psi and an elongation of 800 percent.

## Example 5

In this comparative example, the reaction flask of Example l was loaded with 9 gm of HPTS, 30 ml of THF, 70 ml of DPE and 0.003 mole of HMTS. Next 0.00l5 mole of dilithium diphenylsilanolate initiator was added and the reaction flask heated to 65°C. for l2 minutes, then heated to l65°C. for 2 hours, to form a polymer of diphenylsiloxy units, with the activated lithium catalyst at each end of the polymer. At that time the reaction temperature was lowered to ll5°C. and 46.3 g of HMTS was added and reacted for 2 hours at ll5°C., to ring open the hexamethylcyclotrisiloxane and add dimethylsiloxy units to each end of the polymer. The reaction was cooled to room temperature and terminated by adding 2 ml of acetic acid. After 30 minutes for reaction, l00 ml of toluene was added and the solution was poured into methanol. The reaction product was recovered and dried at l00°C. The yield of hydroxy endblocked copolymer, having dimethylsiloxy blocks on each end of a diphenylsiloxy block, was 90 percent and the RI was l.43.

This conventional block copolymer technology is limited to refractive indices of less than about l.45 because processing of copolymers made using this technique becomes difficult or impossible due to high viscosities and materials being formed which do not have elastomeric properties.

## Claims

1. A process for making copolymers having dimethylsiloxy and diphenylsiloxy repeating units in the desired ratios comprising (A) reacting a mix-ture of hexamethylcyclotrisiloxane and hexaphe-nylcyclotrisiloxane in the presence of a lithium containing catalyst and a solvent, at a temperature selected to favor the ring-opening desired, temperatures below 100°C. favoring the opening of the hexamethylcyclotrisiloxane and temperatures above 100°C. favoring the opening of the hexaphenylcyclotrisiloxane, the ratios of hexam-ethylcyclotrisiloxane and hexaphenylcyclotrisi-loxane being chosen to give the desired type of copolymer, then removing the polymer from solution by precipitating the polymer by adding to a surplus of methanol and filtering, then evaporating any remaining solvent from the filtrate, to give a copolymer.

2. The method of claim 1 in which the product of step (A) is further reacted by (B) adding either hexam-ethylcyclotrisiloxane or hexaphenylcyclotrisilox-ane and reacting to give a homopolymer attached to the copolymer of step (A), before removing the polymer from solution.

3. The method of claim 1 in which the product of step (A) is further reacted by (C) replacing the lithium atom at the end of the polymer by reacting with a chainstopping agent selected from organosilane, organosilazane or acetic acid.

4. The method of claim 2 in which the product of steps (A) and (B) is further reacted by (C) replacing the lithium atom at the end of the polymer by reacting with a chainstopping agent selected from organosilane, organosilazane or acetic acid.